# EUROPÄISCHE PATENTSCHRIFT

(11) **EP 2 670 791 B1**
(45) Veröffentlichungstag und Bekanntmachung des Hinweises auf die Patenterteilung: **10.01.2018**
(21) Anmeldenummer: 12703510.3
(22) Anmeldetag: 06.02.2012
(51) Int. Cl.: C08J 5/04, B32B 27/04, A63C 5/12

(54) **VERBUNDWERKSTOFF AUF BASIS EINES NATURFASERVERSTÄRKTEN KUNSTSTOFFES**
COMPOSITE MATERIAL BASED ON A NATURAL-FIBER-REINFORCED PLASTIC
MATÉRIAU COMPOSITE À BASE DE MATIÈRE PLASTIQUE RENFORCÉE DE FIBRES NATURELLES

(30) Priorität: 04.02.2011 DE 102011010371
(43) Veröffentlichungstag der Anmeldung: 11.12.2013
(73) Patentinhaber: ECCO Gleittechnik GmbH, 82402 Seeshaupt (DE); Mühlbauer, Sebastian, 04229 Leipzig (DE)
(72) Erfinder: MÜHLBAUER, Sebastian, 04229 Leipzig (DE); VON DRACH, Volker, 83703 Gmund (DE)
(74) Vertreter: Reitstötter Kinzebach
(86) Internationale Anmeldenummer: PCT/EP2012/051975
(87) Internationale Veröffentlichungsnummer: WO 2012/104436

(56) Entgegenhaltungen:
- WO-A1-2009/127816
- DE-A1- 10 012 443
- US-A- 5 747 134
- US-A1- 2003 008 590
- US-A1- 2006 105 663
- US-A1- 2009 121 447
- US-A1- 2009 169 836

## Beschreibung

Die vorliegende Erfindung betrifft einen Verbundwerkstoff auf Basis eines naturfaserverstärkten duroplastischen Kunststoffes mit einem Verstärkungsmaterial aus einem Spunlace-Vlies aus Naturfasern.

Naturfaserverstärkte Kunststoffe sind bereits bekannt. Sie basieren häufig auf Epoxidsystemen und enthalten Naturfasern als Verstärkungsmaterialien, siehe beispielsweise WO 00/06632. Ihre Festigkeits- und Elastizitätseigenschaften sind jedoch noch nicht zufriedenstellend.

Die WO 2009/127816 beschreibt ein Verfahren zur Herstellung von röhrenförmigen Vliesstoffen, indem ein faserförmiges Material um einen rotierbaren Dorn gewickelt wird und die Fasern gleichzeitig wasserstrahlverfestigt werden. Dadurch weisen sie im Vergleich zu einer Vernadelung eine verbesserte Bindung auf.

Die US 2009/0121447 beschreibt ein Skateboard aus einer oberen und einer damit verbundenen unteren Schicht. Die obere Schicht ist mit einer Deckschicht aus Aramidfasern ausgerüstet, die einen seitlichen Schutzstreifen aufweist. Die DE 100 12 443 A1 beschreibt ein Verfahren zur Abdichtung von Rohrleitungen mit einem Vliesstoff, der mit einem härtbaren Klebstoff getränkt und auf die abzudichtende Stelle aufgebracht wird.

Der vorliegenden Erfindung liegt die Aufgabe zugrunde, Verbundwerkstoffe auf Basis eines naturfaserverstärkten Kunststoffes mit verbesserten Festigkeits- und Elastizitätseigenschaften zur Verfügung zu stellen.

Überraschenderweise wurde gefunden, dass diese Aufgabe gelöst wird, wenn man als Verstärkungsmaterial ein Spunlace-Vlies aus Naturfasern einsetzt.

Die vorliegende Erfindung betrifft daher einen Verbundwerkstoff auf Basis eines naturfaserverstärkten duroplastischen Kunststoffes, der als Verstärkungsmaterial mindestens eine Lage eines Spunlace-Vlieses aus Naturfasern umfasst, wobei der Verbundwerkstoff in Form einer länglichen Platte vorliegt und die Vorzugsrichtung der Fasern des Spunlace-Vlieses einen Winkel mit der Längsachse der Platte von mindestens 20° bildet.

Spunlace-Vliese und deren Herstellung sind bekannt, siehe beispielsweise Ullmann's Encyclopedia of Industrial Chemistry, 5th Ed., Vol. A17, Seite 578 oder http://web.utk.edu/~mse/Textiles/Spunlace.htm.

Spunlace-Vliese aus Naturfasern sind im Handel erhältlich oder lassen sich in üblicher Weise herstellen. Als Naturfasern kommen Flachs-, Hanf-, Sisal-, Jute-, Kenaf-, Baumwolle-, Kokos-, Nessel-, Ramie-, Bambus- oder andere Pflanzenfasern in Frage. Vorzugsweise verwendet man Bastfasern wie Flachs-oder Hanffasern.

Als besonders geeignet haben sich die Naturfasern erwiesen, die nach den in der WO 90/12906 und WO 00/66819 beschriebenen Verfahren herstellbar sind. Es handelt sich dabei um ultraschallaufgeschlossene Pflanzenfasern sowie Pflanzenfasern, deren Elementarfasern fibrilliert sind. Flachsfasern sind jeweils bevorzugt.

Zweckmäßigerweise werden die Vliese aus gereinigten und/oder gebleichten Pflanzenfasern hergestellt.

Es können auch Mischungen der Naturfasern mit synthetischen Fasern, wie Glasfasern, Carbonfasern, Aramidfasern etc., eingesetzt werden. Die Menge an synthetischen Fasern kann zwischen 5 und 95, vorzugsweise zwischen 10 und 50 Gewichts-%, liegen.

Die Dicke des verwendeten Spunlace-Vlieses, ausgedrückt als Flächengewicht in g/m², richtet sich nach dem Anwendungszweck. Das Flächengewicht liegt im allgemeinen im Bereich von 50 g/m² bis 300 g/m², insbesondere 70 g/m² bis 250 g/m².

Auf Grund der Herstellungsweise der Spunlace-Vliese (water-jet bonding) sind die Fasern des Vlieses im allgemeinen in zwei Richtungen angeordnet, die in der Regel aufeinander senkrecht stehen. Die Zugfestigkeit des Spunlace-Vlieses in den beiden Richtungen ist unterschiedlich. Im Rahmen der vorliegenden Erfindung wird diejenige Richtung als Vorzugsrichtung bezeichnet, welche die höhere Zugfestigkeit besitzt. Die Zugfestigkeit kann in bekannter Weise, beispielsweise gemäß ASTM D 5035-95 (strip method) oder ISO 13934-1 bestimmt werden.

Der Verbundwerkstoff liegt in Form einer länglichen Platte vor, wobei die eine Achse (Längsachse) der Platte länger als die andere (Querachse) ist. Das Spunlace-Vlies ist so angeordnet, dass die Vorzugsrichtung der Fasern des Spunlace-Vlieses einen Winkel mit der Längsachse der Platte von mindestens 20°, insbesondere mindestens 30° oder 35°, beispielsweise 30° bis 75°, bildet.

Gegenstand der Erfindung ist auch ein Flachbauteil, das mindestens eine Schicht aus einem Kunststoffmaterial oder einem Holzmaterial und mindestens eine Schicht aus dem Verbundwerkstoff umfasst. Die Schicht(en) aus dem Verbundmaterial kann (können) beliebig angeordnet sein, beispielsweise auf beiden Seiten des Kunststoff- oder Holzmaterials, zwischen zwei Schichten aus dem Kunststoffmaterial oder dem Holzmaterial etc. Bei zwei oder mehreren Schichten des Kunststoff- oder Holzmaterials, können diese gleich oder verschieden sein.

Dadurch dass die Vorzugsrichtung der Fasern des Spunlace-Vlieses einen Winkel mit der Längsachse des Flachbauteils von mindestens 20° bildet, wird die Torsion des Flachbauteils verringert.

Wenn das Spunlace-Vlies in dem Flachbauteil so angeordnet ist, dass die Vorzugsrichtung der Fasern des Spunlace-Vlieses parallel zur Längsachse des Flachbauteils verläuft, wird die Steifigkeit des Flachbauteils vergrößert. Gemäß einer Ausführungsform ist das Flachbauteil daher aus einem Kern aus dem Kunststoffmaterial oder dem Holzmaterial aufgebaut, auf den zwei Schichten des Verbundmaterials aufgebracht sind, die sich auf der einen Seite oder auf der einen und der anderen Seite des Kerns befinden können. Die eine Schicht des Verbundmaterials wird dabei so aufgebracht, dass die Vorzugsrichtung der Fasern des Spunlace-Vlieses parallel zur Längsachse des Flachbauteils verläuft und die Vorzugsrichtung der Fasern des anderen Spunlace-Vlieses einen Winkel mit der Längsachse des Flachbauteils von mindestens 20° bildet. Der Kern kann aus einer oder mehreren Schichten des Kunststoff- oder Holzmaterials, die gleich oder verschieden sein können, aufgebaut sein.

Das Spunlace-Vlies kann die gesamte Fläche des Fläche des Flachbauteils bedecken oder nur einen Teil davon. Es kann zweckmässig sein, das Spunlace-Vlies in Form von Streifen, sogenannten Stringers, aufzubringen. Die Streifen können unterschiedlich lang und/oder unterschiedlich breit sein, je nach Anwendungsgebiet und Anwendungszweck. Wenn die Streifen beispielsweise bei Skateboards zur Anwendung kommen, liegt die Länge der Streifen, die mit der Längsachse des Flachbauteils einen Winkel bilden, im allgemeinen im Bereich von 20 bis 60 cm und deren Breite im Bereich von 3 bis 15 cm. Gemäß einer besonders geeigneten Ausführungsform sind die Streifen, die mit der Längsachse des Flachbauteils einen Winkel bilden, gekreuzt angeordnet, d.h. in Form eines X.

Die Herstellung des erfindungsgemäßen Flachbauteils erfolgt in der Regel, indem man die einzelnen Komponenten (Verstärkungsfasern, Verbundwerkstoff oder Spunlace-Vlies und Holzfurniere) schichtweise übereinander laminiert und durch einen Kleber bzw. das Matrixmaterial für die Verstärkungsfasern bzw. das Spunlace-Vlies fixiert. Die Härtung kann bei Raumtemperatur oder bei erhöhter Temperatur in üblicher Weise erfolgen, beispielsweise im Vakuum oder unter Überdruck, um einen möglichst hohen Faservolumengehalt zu erreichen.
Als Kunststoffe für das Matrixmaterial des Verbundwerkstoffs kommen insbesondere Duroplaste in Betracht. Duroplaste entstehen bekanntlich durch irreversible und enge Vernetzung aus Oligomeren, gegebenenfalls unter Zusatz von anderen Monomeren oder Polymeren. Unter Duroplasten werden hier sowohl die Rohstoffe vor der Vernetzung (die noch zu härtenden Harze) als auch die ausgehärteten Reaktionsprodukte verstanden. Geeignete Duroplasten sind beispielsweise Melaminharze, Phenolharze, Epoxidharze oder Siliconharze. Epoxidharze sind bevorzugt. Als besonders geeignet haben sich Epoxidharze auf Basis von Naturölen erwiesen. Naturöle sind Gemische unterschiedlicher Fettsäureglycerinester mit einem Anteil an ungesättigten Fettsäureresten. Beispiele für derartige Öle sind Rapsöl, Sonnenblumenöl, Sojaöl, Leinöl, Hanföl, Rizinusöl, Kokosöl oder Palmöl. Diese Öle lassen sich in bekannter Weise epoxidieren und dann zur Herstellung der Verbundwerkstoffe einsetzen. Epoxidharze auf Leinölbasis sind bevorzugt.

Das Matrixmaterial aus den erfindungsgemäß verwendeten Duroplasten kann durch Zugabe von thermoplastischen Polymeren, beispielsweise Polyolefine, wie Polyethylen oder Polypropylen, oder Polyester, wie Polyethylenterephthalat modifiziert werden.

Weiter können den Verbundwerkstoffen übliche Hilfsmittel zugesetzt werden, wie Flammschutzmittel, Farbpigmente, UV-Absorptionsmittel sowie organische und/oder anorganische Füllstoffe. Die Hilfsstoffe werden üblicherweise in Mengen im Bereich von etwa 0,1 bis 5 Gew.-% eingesetzt.

Die Verbundwerkstoffe können nach bekannten Herstellungstechnologien wie der Autoklav-, Wickel-, Handlaminier- oder Harzinjektionstechnik zu Formkörpern verarbeitet werden. Dabei wird das Spunlace-Vlies üblicherweise in eine ungehärtete Matrixmasse des Kunststoffs eingebracht bzw. damit getränkt, d.h. benetzt und umhüllt. Die so erhaltenen Formkörper werden dann in üblicher Weise gehärtet, beispielsweise durch Zugabe von Härtern und/oder durch Erhitzen.

Als Kunststoffmaterial für das Flachbauteil kommen die oben genannten Duroplasten und thermoplastischen Kunststoffe in Frage.

Die erfindungsgemäßen Verbundwerkstoffe lassen sich beispielsweise zu Flachbauteilen für die folgenden Bereiche verwenden:
- Sportgeräte, wie Skateboards einschließlich Longboards, Surfbretter, Windsurfbretter, Ski, Snowboards, Tennis-, Badminton- oder Tischtennisschläger;
- Fahrzeugbau, beispielsweise als Stoßfänger, Spoiler, Fahrzeugverkleidung, für Wohnwägen oder Wohnmobile, Innenausrüstung von Fahrzeugen, etc.;
- Flugzeug- und Eisenbahnbau, beispielsweise als Schalenelement oder Verkleidung für den Kabinenbau, für Segelflugzeuge, etc.;
- Bauindustrie, beispielsweise im Fassadenbau, Brückenbau, Betonbau (Verschalungen), Rohrleitungsbau, Fensterbau, Lagerbau, Regalbau, Badewannen, Duschwahnen, Waschbecken, etc.;
- Möbelindustrie, beispielsweise für Schubbladensysteme, Stapelkisten, Verkleidungen, etc.;
- Spielzeugindustrie, beispielsweise für den Modellbau, Spielzeuge, etc.;
- Verpackungs- und Transportindustrie, beispielsweise für Behälter, wie Kanister, Fässer, Tanks, Koffer, Transportbehälter, Skisärge, Klappbodenbehälter, Schubbladensysteme, Stapelkisten, etc.;
- Sicherheitstechnik, beispielsweise für die Herstellung von Schutzhelmen, im Hochwasserschutz oder Lärmschutz, für Absperrungen, Schilder, etc.;
- Maschinen- und Apparatebau, beispielsweise für Rotorblätter von Windkrafträdern oder Windmühlen.

Die erfindungsgemäßen Verbundwerkstoffe zeichnen sich durch hohe Festigkeit und Elastizität aus und sind sowohl in der Herstellung als auch in der Entsorgung umweltfreundlich.

Gegenstand der vorliegenden Erfindung ist auch ein Flachbauteil in Form einer Skateboardplatte, die einen Kern aus mindestens einer Holzschicht, gegebenenfalls mindestens eine faserverstärkte Schicht und mindestens eine weitere Schicht aus einem erfindungsgemäßen Verbundwerkstoff umfasst. Zweckmäßigerweise verwendet man einen Kern aus einem Laminat aus mehreren Holzschichten.

Gemäß einer Ausführungsform ist mindestens eine faserverstärkte Schicht auf mindestens einer Seite des Kerns angeordnet. Bevorzugt ist es, zwei faserverstärkte Schichten auf beiden Seiten des Kerns anzuordnen. Die zweite Schicht erstreckt sich zweckmäßigerweise nur über den mittleren Bereich der Platte.

Gemäß einer weiteren Ausführungsform kann der Aufbau der Platte durch die erwähnten Stringers ergänzt werden oder die erwähnte zweite Schicht im mittleren Bereich der Skateboardplatte wird durch Stringer ersetzt. Dadurch kann das Flex-und/oder Fahrverhalten gezielt beeinflusst werden.

Gemäß einer weiteren Ausführungsform ist die Schicht aus dem Verbundwerkstoff auf einer oder auf beiden faserverstärkten Schichten angeordnet. Die Schicht aus dem Verbundwerkstoff bildet daher in der Regel die Außenschicht (abgesehen von etwaigen Dekorschichten).

Bei der faserverstärkten Schicht handelt es sich in der Regel ebenfalls um einen Verbundwerkstoff aus einer Duroplastmatrix, die Fasern, insbesondere Glasfasern oder Carbonfasern, umfasst.

Der Aufbau der Skateboardplatte ist bis auf die beiden Deckschichten aus den erfindungsgemäßen Verbundwerkstoffen in üblicher Weise gestaltet. Der Einsatzbereich bestimmt dabei den konstruktiven Aufbau. Die Herstellung der Skateboardplatte erfolgt in üblicher Weise, beispielsweise wie oben für die Herstellung des Flachbauteils beschrieben.

Es hat sich als besonders zweckmäßig erwiesen, zwei aufeinanderliegende Schichten aus dem Verbundwerkstoff mit dem Spunlace-Vlies vorzusehen und diese so anzuordnen, dass die Vorzugsrichtung der Fasern des einen Vlieses einen Winkel α von mindestens 20° mit der Längsachse der Platte bilden. Dabei kann die Anordnung des Vlieses so sein, dass sich der Winkel in Laufrichtung oder entgegen der Laufrichtung ergibt. Gegebenenfalls kann die erste Schicht durch Stringers ersetzt oder ergänzt werden. Besonders vorteilhaft ist es, die zweite Schicht aus dem Verbundwerkstoff so anzuordnen, dass die Vorzugsrichtung der Fasern des Spunlace-Vlieses mit der Längsachse des Skateboards einen entgegengesetzten Winkel -α oder bevorzugt keinen Winkel bilden, d.h. die Vorzugsrichtung der Fasern verläuft parallel zur Längsachse. Zweckmäßigerweise beträgt der Winkel -α ebenfalls mindestens 20°. Im Allgemeinen liegen beide Winkel im Bereich von 30 bis 75°. Auch die zweite Schicht kann gegebenenfalls kann durch Stringers ersetzt oder ergänzt werden.

Die zweite, über den mittleren Bereich der Platte sich erstreckende faserverstärkte Schicht ist zweckmäßigerweise ebenfalls so angeordnet, dass die Vorzugsrichtung der Fasern der Schicht einen Winkel α1 von mindestens 20° mit der Längsachse der Platte bilden. Dabei kann die Anordnung des Vlieses so sein, dass sich der Winkel in Laufrichtung oder entgegen der Laufrichtung ergibt. Der Winkel α1 ist vorteilhafterweise kleiner als der Winkel α. Er liegt im Allgemeinen im Bereich von 20 bis 70°. Die erste faserverstärkte Schicht ist im Allgemeinen so angeordnet, dass die Vorzugsrichtung der Fasern parallel zur Längsachse verläuft, d.h. sie bildet keinen Winkel mit der Längsachse.

Die Verbundwerkstoffe und die faserverstärkten Schichten, die so aufgebracht sind, dass die Vorzugsrichtung der Fasern parallel zur Längsachse des Boards verläuft, nehmen Zug- und Biegespannungen auf. Die Schichten, bei denen die Vorzugsrichtung der Fasern einen Winkel mit der Längsachse bildet nehmen Torsions- und Querkontraktionsspannungen auf. Die faserverstärkten Schichten, die im mittleren Bereich aufgebracht sind verstärken das Board an der Stelle der höchsten Belastung, nämlich in der Mitte zwischen den Achsen der Laufräder des fertiggestellten Boards. Die erfindungsgemäße Skateboardplatte besitzt somit hohe Spannung und Elastizität, die auch über einen längeren Zeitraum anhalten.

Das nachfolgende Beispiel erläutert die Erfindung.

### Herstellung und Aufbau eines Longboards

Der Kern wird gebildet aus einem zentralen Holzfurnier mit einer Dicke von 1,4 mm, das auf beiden Seiten mit Hilfe eines Klebers mit jeweils einem Holzfurnier (Dicke 2,4 mm) furniert wird (Länge der Furniere 1050 mm, Breite 250 mm). Auf das Laminat wird auf beiden Seiten über die gesamte Fläche eine faserverstärkte Schicht aus Carbonfasern (Fasergewebe mit 300 g/m²) aufgebracht, wobei die Carbonfasern mit einem Epoxidharz HP-E55 L (Fa. HP Textiles) oder einem Epoxidharz auf Basis eines Naturöls (400 bis 600 g/m² des Harzsystems Dracowol EP-10/1 und Dracowol HOL-2 der Dracosa AG) im Mischungsverhältnis von 2:1 imprägniert werden. Die Vorzugsrichtung der Carbonfasern ist parallel zur Längsachse des Laminats. Darauf wird eine zweite faserverstärkte Schicht gleichen Aufbaus so aufgebracht, dass die Vorzugsrichtung der Fasern in einem Winkel von etwa 30° zur Längsachse der Platte verläuft. Die zweite Schicht erstreckt sich jedoch nur im mittleren Bereich des Laminats. Darauf wird ein Verbundwerkstoff aus einem Spunlace-Vlies (150 - 200 g/m²), das mit einem Epoxidharz HP-E55 L oder einem Epoxidharz auf Basis eines Naturöls (400 bis 600 g/m² des Harzsystems Dracowol EP-10/1 und Dracowol HOL-2 der Dracosa AG im Mischungsverhältnis von 2:1) imprägniert ist. Die Vorzugsrichtung der Flachsfasern bildet mit der Längsachse der Platte einen Winkel von 45°. Darauf wird eine zweite Schicht aus dem Verbundwerkstoff aufgebracht, die wie die erste Schicht aufgebaut und zusammengesetzt ist, die Vorzugsrichtung der Flachsfasern verläuft jedoch parallel zur Längsachse der Platte. Auf der anderen Seite des Holzlaminats werden die gleichen Schichten aufgebracht. Der Formkörper wird dann mehrere Stunden in einer Presse, gegebenenfalls bei einer Temperatur von 50-70 °C, gehärtet. Nach mehrtägigem Ruhen zur Nachhärtung wird der Formkörper zugeschnitten.

## Patentansprüche

1. Verbundwerkstoff auf Basis eines naturfaserverstärkten duroplastischen Kunststoffes, der als Verstärkungsmaterial mindestens eine Lage eines Spunlace-Vlieses aus Naturfasern umfasst, wobei der Verbundwerkstoff in Form einer länglichen Platte vorliegt und die Vorzugsrichtung der Fasern des Spunlace-Vlieses einen Winkel mit der Längsachse der Platte von mindestens 20° bildet.

2. Verbundwerkstoff nach Anspruch 1, wobei das Spunlace-Vlies Flachs-, Hanf-, Sisal-, Jute-, Kenaf-, Baumwolle-, Kokos-, Nessel-, Ramie-, Bambus- oder Bastfasern anderer Pflanzen oder ein Gemisch von zwei oder mehreren dieser Fasern umfasst.

3. Verbundwerkstoff nach Anspruch 2, wobei das Spunlace-Vlies ultraschallaufgeschlossene oder fibrillierte Fasern umfasst.

4. Verbundwerkstoff nach einem der vorhergehenden Ansprüche, wobei das Spunlace-Vlies Flachsfasern umfasst.

5. Verbundwerkstoff nach einem der vorhergehenden Ansprüche, wobei das Spunlace-Vlies ein Gemisch aus Naturfasern und synthetischen Fasern umfasst.

6. Flachbauteil, das mindestens eine Schicht aus einem Kunststoffmaterial oder einem Holzmaterial und mindestens eine Schicht aus dem Verbundwerkstoff gemäß einem der Ansprüche 1 bis 5 umfasst.

7. Skateboardplatte, umfassend einen Kern aus mindestens einer Schicht aus einem Holzmaterial, gegebenenfalls mindestens eine faserverstärkte Kunststoffschicht, und mindestens eine weitere Schicht aus einem Verbundwerkstoff nach einem der Ansprüche 1 bis 5.

8. Skateboardplatte nach Anspruch 7, wobei auf beiden Seiten des Kerns aus der Holzmaterialschicht mindestens eine faserverstärkte Schicht angeordnet ist, wobei gegebenenfalls eine zweite faserverstärkte Schicht vorgesehen ist, die sich nur über den mittleren Bereich der Platte erstreckt.

9. Skateboardplatte nach Anspruch 8, wobei die Vorzugsrichtung der Fasern der zweiten faserverstärkten Schicht einen Winkel mit der Längsachse der Platte von mindestens 20° bildet.

10. Skateboardplatte nach einem der Ansprüche 7 bis 9, wobei mindestens eine Schicht aus dem Verbundwerkstoff auf der faserverstärkten Schicht angeordnet ist.

11. Skateboardplatte nach einem der Ansprüche 8 bis 10, wobei auf der faserverstärkten Schicht mindestens zwei Schichten aus dem Verbundwerkstoff aufgebracht sind und eine Schicht so aufgebracht ist, dass die Vorzugsrichtung der Fasern des Spunlace-Vlieses einen Winkel mit der Längsachse der Platte von mindestens 20° bildet, wobei die zweite Schicht aus dem Verbundwerkstoff gegebenenfalls so aufgebracht ist, dass die Vorzugsrichtung der Fasern des Spunlace-Vlieses parallel zur Längsachse der Platte verläuft.

12. Skateboardplatte nach Anspruch 11, wobei die erste Schicht aus dem Verbundwerkstoff durch Streifen aus dem Verbundwerkstoff ersetzt ist, die gegebenenfalls gekreuzt angeordnet sind.

13. Skateboard, umfassend eine Skateboardplatte nach einem der Ansprüche 7 bis 12.

## Claims

1. Composite material based on a natural-fibre-reinforced thermoset plastic which comprises, as reinforcement material, at least one ply of a spunlace nonwoven made of natural fibres, where the composite material is present in the form of an elongate panel and the preferential direction of the fibres of the spunlace nonwoven forms an angle of at least 20° with the longitudinal axis of the panel.

2. Composite material according to Claim 1, where the spunlace nonwoven comprises flax fibres, hemp fibres, sisal fibres, jute fibres, kenaf fibres, cotton fibres, coconut fibres, nettle fibres, ramie fibres, bamboo fibres, or bast fibres of other plants, or a mixture of two or more of said fibres.

3. Composite material according to Claim 2, where the spunlace nonwoven comprises ultrasonicated or fibrillated fibres.

4. Composite material according to any of the preceding claims, where the spunlace nonwoven comprises flax fibres.

5. Composite material according to any of the preceding claims, where the spunlace nonwoven comprises a mixture of natural fibres and synthetic fibres.

6. Flat component which comprises at least one layer made of a plastics material or of a timber material, and which comprises at least one layer made of the composite material according to any of Claims 1 to 5.

7. Skateboard panel which comprises a core made of at least one layer made of a timber material, and which optionally comprises at least one fibre-reinforced plastics layer, and which comprises at least one further layer made of a composite material according to any of Claims 1 to 5.

8. Skateboard panel according to Claim 7, where the arrangement has, on both sides of the core made of the timber material layer, at least one fibre-reinforced layer, where there is optionally a second fibre-reinforced layer which extends only over the central region of the panel.

9. Skateboard panel according to Claim 8, where the preferential direction of the fibres of the second fibre-reinforced layer forms an angle of at least 20° with the longitudinal axis of the panel.

10. Skateboard panel according to any of Claims 7 to 9, where the arrangement has at least one layer made of the composite material on the fibre-reinforced layer.

11. Skateboard panel according to any of Claims 8 to 10, where there are, arranged on the fibre-reinforced layer, at least two layers made of the composite material, and where one layer has been applied in such a way that the preferential direction of the fibres of the spunlace nonwoven forms an angle of at least 20° with the longitudinal axis of the panel, where the second layer made of the composite material has optionally been applied in such a way that the preferential direction of the fibres of the spunlace nonwoven is parallel to the longitudinal axis of the panel.

12. Skateboard panel according to Claim 11, where the first layer made of the composite material has been replaced by strips made of the composite material which have optionally been arranged at an angle to one another.

13. Skateboard comprising a skateboard panel according to any of Claims 7 to 12.

## Revendications

1. Matériau composite à base d'un plastique duroplastique renforcé par des fibres naturelles, qui comprend en tant que matériau de renforcement au moins une couche d'un non-tissé lacé par filage en fibres naturelles, le matériau composite se présentant sous la forme d'une plaque oblongue et la direction préférentielle des fibres du non-tissé lacé par filage formant un angle d'au moins 20° avec l'axe longitudinal de la plaque.

2. Matériau composite selon la revendication 1, dans lequel le non-tissé lacé par filage comprend des fibres de lin, de chanvre, de sisal, de jute, de kénaf, de coton, de coco, d'ortie, de ramie, de bambou ou des fibres libériennes d'autres plantes ou un mélange de deux ou plus de ces fibres.

3. Matériau composite selon la revendication 2, dans lequel le non-tissé lacé par filage comprend des fibres décomposées par ultrason ou fibrillées.

4. Matériau composite selon l'une quelconque des revendications précédentes, dans lequel le non-tissé lacé par filage comprend des fibres de lin.

5. Matériau composite selon l'une quelconque des revendications précédentes, dans lequel le non-tissé lacé par filage comprend un mélange de fibres naturelles et de fibres synthétiques.

6. Composant plat, qui comprend au moins une couche en un matériau à base de plastique ou un matériau à base de bois et au moins une couche du matériau composite selon l'une quelconque des revendications 1 à 5.

7. Plaque de skateboard, comprenant un noyau en au moins une couche d'un matériau à base de bois, éventuellement au moins une couche en plastique renforcée par des fibres et au moins une couche supplémentaire en un matériau composite selon l'une quelconque des revendications 1 à 5.

8. Plaque de skateboard selon la revendication 7, dans laquelle au moins une couche renforcée par des fibres est agencée sur les deux côtés du noyau en la couche de matériau à base de bois, une deuxième couche renforcée par des fibres étant éventuellement prévue, qui ne s'étend que sur la zone centrale de la plaque.

9. Plaque de skateboard selon la revendication 8, dans laquelle la direction préférentielle des fibres de la deuxième couche renforcée par des fibres forme un angle d'au moins 20° avec l'axe longitudinal de la plaque.

10. Plaque de skateboard selon l'une quelconque des revendications 7 à 9, dans laquelle au moins une couche du matériau composite est agencée sur la couche renforcée par des fibres.

11. Plaque de skateboard selon l'une quelconque des revendications 7 à 10, dans laquelle au moins deux couches du matériau composite sont appliquées sur la couche renforcée par des fibres et une couche est appliquée de sorte que la direction préférentielle des fibres du non-tissé lacé par filage forme un angle d'au moins 20° avec l'axe longitudinal de la plaque, la deuxième couche du matériau composite étant éventuellement appliquée de sorte que la direction préférentielle des fibres du non-tissé lacé par filage soit parallèle à l'axe longitudinal de la plaque.

12. Plaque de skateboard selon la revendication 11, dans laquelle la première couche du matériau composite est remplacée par des bandes du matériau composite, qui sont éventuellement agencées sous forme croisée.

13. Skateboard, comprenant une plaque de skateboard selon l'une quelconque des revendications 7 à 12.
